(19) Europäisches Patentamt
European Patent Office
Office européen des brevets

(11) Veröffentlichungsnummer: **0 236 272 B1**

# (12) EUROPÄISCHE PATENTSCHRIFT

(45) Veröffentlichungstag der Patentschrift: **12.06.91 Patentblatt 91/24**

(51) Int. Cl.$^5$: **A01N 43/36**

(21) Anmeldenummer: **87810108.8**

(22) Anmeldetag: **26.02.87**

## (54) Fungizide Verwendung eines Cyanopyrrol-Derivates.

Die Akte enthält technische Angaben, die nach dem Eingang der Anmeldung eingereicht wurden und die nicht in dieser Patentschrift enthalten sind.

(30) Priorität: **04.03.86 CH 865/86**

(43) Veröffentlichungstag der Anmeldung: **09.09.87 Patentblatt 87/37**

(45) Bekanntmachung des Hinweises auf die Patenterteilung: **12.06.91 Patentblatt 91/24**

(84) Benannte Vertragsstaaten: **AT BE CH DE ES FR GB GR IT LI LU NL SE**

(56) Entgegenhaltungen:
**EP-A- 0 182 738**
**EP-A- 0 183 217**
**DE-A- 2 927 480**

(56) Entgegenhaltungen:
**DERWENT ABSTRACTS, 7. Oktober 1981, Zusammenfassung Nr.59691D, Derwent Publications Ltd, London, GB; & J5 6079-672 (NIPPON SODA K.K.) 30-06-1981**
**CHEMICAL ABSTRACTS, Band 105, Nr. 7, 18. August 1986, Seite 606, Zusammenfassung Nr. 60520r, Columbus, Ohio, US; & JP-A-61 30 571 (NIPPON SODA CO., LTD) 12-02-1986**

(73) Patentinhaber: **CIBA-GEIGY AG**
**Klybeckstrasse 141**
**CH-4002 Basel (CH)**

(72) Erfinder: **Staub, Theodor, Dr.**
**Rheintalweg 90**
**CH-4125 Riehen (CH)**
Erfinder: **Dahmen, Heide**
**Löwenbergstrasse 34**
**CH-4059 Basel (CH)**
Erfinder: **Nyfeler, Robert, Dr.**
**Bärenfelserstrasse 8**
**CH-4057 Basel (CH)**
Erfinder: **Williams, Robert J.**
**Baselstrasse 12**
**CH-4124 Schönenbuch (CH)**

EP 0 236 272 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung eines Cyanopyrrol-Derivats zur Bekämpfung von pflanzenschädigenden Pilzen, insbesondere von Botrytis spp., und den fungiziden Einsatz dieses Wirkstoffs zur Saatbeizung, sowie mikrobizide Mittel, besonders Beizmittel, welche diesen Wirkstoff enthalten.

Der Wirkstoff entspricht der Formel Ia, 3-Cyano-4-(2,3-dichlorphenyl)-pyrrol :

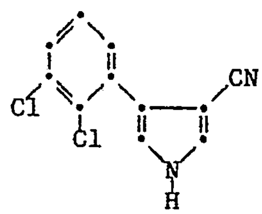

(Ia).

Diese Verbindung wird neben anderen 3-Cyano-4-phenyl-pyrrol-Derivaten als Zwischenprodukt für N-acetylierte Pyrrol-Fungizide in der DE-OS 29 27 480 (bzw. in der GB-Patentanmeldung 2,024,824) genannt. Es wird gesagt, dass die acetylierten Präparate hochrangige Pflanzenfungizide darstellen, während die nichtacetylierten Zwischenprodukte deutlich unterlegene, also schwache fungizide Wirkung aufweisen. Diese Aussage trifft für den überwiegenden Teil der dort genannten Verbindungen zu. Es wurde aber nicht erkannt, dass die Verbindung Ia in charakteristischer Weise vollständig von dieser aufgestellten Regel abweicht.

Es wurde gefunden, dass der der erfindungsgemässen Verwendung zugrundeliegende Wirkstoff der Formel Ia eine nicht vorhersehbare hohe fungizide Aktivität entfaltet, speziell gegen Botrytis spp., sowie bei der Anwendung in der Saatbeizung. Der Wirkstoff der Formel Ia ist dabei sämtlichen in der DE-OS 29 27 480 als fungizide Zwischenprodukte genannten 3-Cyano-4-phenylpyrrol-Derivaten deutlich überlegen. Darüber hinaus kommt der erfindungsgemässen fungiziden Verwendung des Wirkstoffs der Formel Ia insofern eine zusätzliche vorteilhafte wirtschaftliche Bedeutung zu, weil er eine Vorstufe der acetylierten Folgederivate darstellt und somit produktionstechnisch einfacher und billiger als diese zugänglich ist.

Die erfindungsgemässe Verwendung des Wirkstoffs der Formel Ia richtet sich insbesondere gegen Botrytis spp., die zu der Klasse der phytopathogenen Fungi imperfecti gehören und einen sehr grossen Wirtspflanzenkreis, wie z.B. Bohne, Apfel, Weinrebe, Gurke, Salat, Zwiebel und Erdbeere, heimsuchen. Darüber hinaus können auf diese Weise weitere zur obengenannten Klasse zählenden Pilze, wie z.B. Pyricularia und Cercospora, erfolgreich bekämpft werden. Ein weiteres bevorzugtes Anwendungsgebiet für die vorliegende Erfindung stellt die Saatbeizung, insbesondere von Getreide, dar. Kulturpflanzen sind diesbezüglich neben den Getreidearten, wie z.B. Weizen, Roggen, Gerste, Hafer, Reis, Mais sowie Kulturhirse, weitere Pflanzen wie Baumwolle, Zuckerrüben, Soja, Bohnen und Erbsen. Dabei können ausser den bereits genannten Fungi imperfecti weitere den folgenden Klassen angehörende phytopathogene Pilzorganismen erfolgreich bekämpft werden : Ascomycetes wie z.B. Erysiphe, Sclerotinia, Fusarium, Monilinia und Helminthosporium ; Basidiomycetes wie z.B. Puccinia, Tilletia und Rhizoctonia ; sowie Oomycetes, z.B. Phytophthora, Plasmopara, Pythium. Die Wirkung gegen den Erreger Rhizoctonia solani (= sheath blight) in Reiskulturen ist besonders hervorzuheben.

Beizmittel, welche das 3-Cyano-4-(2,3-dichlorphenyl)-pyrrol als Wirkstoff enthalten, zählen ebenfalls zur vorliegenden Erfindung.

Zur Durchführung der Erfindung wird der Wirkstoff der Formel Ia direkt oder als Aktivstoff in agrochemischen Formulierungen zusammen mit Träger- und weiteren Hilfsstoffen eingesetzt. Dabei kann er gleichzeitig oder nacheinander mit weiteren Wirkstoffen auf die zu behandelnde Fläche, Pflanze oder das Substrat gegeben werden. Diese weiteren Wirkstoffe können sowohl Düngemittel, Spurenelement-Vermittler oder andere das Pflanzenwachstum beeinflussende Präparate sein. Es können aber auch selektive Herbizide, Insektizide, Fungizide, Bakterizide, Nematizide, Molluskizide oder Gemische mehrerer dieser Präparate sein, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen des Wirkstoffes der Formel Ia bzw. eines agrochemischen Mittels, das mindestens diesen Wirkstoff enthält, ist das Aufbringen auf das Blattwerk (Blattapplikation). Anzahl der Applikationen und Aufwandmenge richten sich dabei nach dem Befallsdruck für den entsprechenden Erreger (Pilzsorte). Der Wirkstoff kann aber auch über den Erdboden durch das Wurzelwerk in die Pflanze gelangen (systemische Wirkung), indem man den Standort der Pflanze mit einer flüssigen Zubereitung tränkt oder die

Substanzen in fester Form in den Boden einbringt, z.B. in Form von Granulat (Bodenapplikation). Darüber hinaus sind in besonderen Fällen weitere Applikationsarten möglich, so z.B. die gezielte Behandlung der Pflanzenstengel oder der Knospen.

Zur Saatbeizung wird der Wirkstoff der Formel Ia auf die Samenkörner aufgebracht (Coating), indem man das Saatgut entweder mit einer flüssigen Zubereitung des Wirkstoffes tränkt oder besprüht oder mit einer festen Zubereitung beschichtet. Dabei stehen als chemische Verfahren z.B. die Tauchbeize, die Benetzungsbeize, die Kurznassbeize, die Feuchtbeize, die Trockenbeize sowie die Ueberschussbeize zur Auswahl.

Für die erfindungsgemässe Verwendung von 3-Cyano-4-(2,3-dichlorphenyl)-pyrrol in Form von Formulierungen wird der Wirkstoff zusammen mit in der Formulierungstechnik üblichen Hilfsmitteln eingesetzt. Zu diesem Zweck wird er z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten sowie durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 50 g bis 5 kg Aktivsubstanz (AS) je ha ; bevorzugt 100 g bis 2 kg AS/ha, insbesondere bei 200 g bis 600 g AS/ha.

Die Formulierungen, welche den Wirkstoff der Formel Ia und feste oder flüssige Zusatzstoffe als Mittel, Zubereitung oder Zusammensetzung enthalten, werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen : Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohle und Glykole sowie deren Ether und Ester, wie Ethanol Ethylenglykol, Ethylenglykolmonomethyl- oder ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxidiertes Kokosnussöl, Sonnenblumenöl oder Sojaöl ; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit als nicht adsorptive Trägermaterialien z.B. Calcit oder Sand in Frage. Darüber hinaus kann eine Vielzahl von vorgranulierten Materialien anorganischer oder organischer Natur wie insbesondere Dolomit oder zerkleinerte Pflanzenrückstände, wie z.B. Korkmehl oder Sägemehl, verwendet werden.

Besonders vorteilhafte, applikationsfördernde Zuschlagstoffe, die zu einer starken Reduktion der Aufwandmenge führen können, sind ferner natürliche oder synthetische Phospholipide aus der Reihe der Kephaline und Lecithine. Verwendbare Handelsmischungen sind z.B. Phophatidylcholin-Mischungen. Synthetische Phospholipide sind z.B. Dioctanoylphophatidylcholin und Dipalmititoylphosphatidylcholin.

Als oberflächenaktive Verbindungen kommen je nach Einsatzgebiet des zu formulierenden Wirkstoffs der Formel Ia nichtionogene, kation-und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen, als auch wasserlösliche synthetische oberflächenaktive Verbindungen sein.

Als Seifen seien die Alkali-, Erdalkali- oder gegebenenfalls subsituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäuremethyl-laurinsalze zu erwähnen.

Häufiger werden jedoch sog. synthetische Tenside verwendet, insbesondere Fettsulfonate, Fettsulfate, sulfonierte Benzimidazol-derivate oder Alkylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalin-sulfonsäure-Formaldehydkondensationsproduktes.

Ferner kommen auch entsprechende Phosphate wie z.B. Salze des Phosphorsäureesters einen p-Nonylphenol-(4-14-ethylenoxidaddukte in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 g Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethylenethanol, Polyethylenglykol und Octylphenoxypolyethoxyethanol erwähnt.

Ferner Kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi(2-chlorethyl)ethylammoniumbromid.

Weitere in der Formulierungstechnik gebräuchliche Tenside sind in dem Fachmann bekannten Publikationen beschrieben.

Die agrochemische Zubereitungen gemäß vorliegender Erfindung enthalten 0,1 bis 95% Wirkstoff der Formel Ia, 99,8 bis 5% eines festen oder flüssigen Zusatstoffes und 0,1 bis 25% eines Tensides.

Während als Handelsware überwiegend Konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

3-Cyano-4-(2,3-dichlorphenyl)-pyrrol kann, wie in der Fachliteratur (z.B. in Tetrahedron Letters (1972) 5337) beschrieben, gemäss folgender Reahtionsgleichung hergestellt werden :

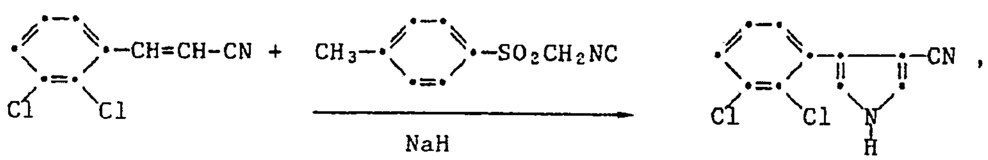


Smp. 153°C.

Formulierungsbeispiele für den Wirkstoff der Formel Ia
(% = Gewichtsprozent)

| Beispiel 1: Spritzpulver | a) | b) | c) |
|---|---|---|---|
| Wirkstoff | 25 % | 50 % | 75 % |
| Na-Ligninsulfonat | 5 % | 5 % | - |
| Na-Laurylsulfonat | 3 % | - | 5 % |
| Na-Diisobutylnaphthalinsulfonat | - | 6 % | 10 % |
| Octylphenolpolyethylenglykol-ether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen. Solche Suspensionen lassen sich auf Getreide-Saatgut aufsprühen. Sie lassen sich auch zur Blattapplikation an der Pflanze verwenden.

| Beispiel 2: Emulsions-Konzentrat | |
|---|---|
| Wirkstoff | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden, mit denen Saatgut jeder Art benetzt werden kann.

| Beispiel 3: Stäubemittel | a) | b) |
|---|---|---|
| Wirkstoff | 5 % | 8 % |
| Talkum | 95 % | - |
| Kaolin | - | 92 % |

Man erhält anwendungsfertige Stäubemittel, indem der Wirkstoff mit den Trägern vermischt auf einer geeigneten Mühle vermahlen wird. Solche Stäubemittel sind zur Trockenbeizung von Getreide-Saatgut geeignet.

Beispiel 4: Extruder Granulat

| | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

Beispiel 5: Umhüllungs-Granulat

| | |
|---|---|
| Wirkstoff | 3 % |
| Polyethylenglykol (MG 200) | 3 % |
| Kaolin | 94 % |

(MG = Molekulargewicht)

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate. Dosiert man im gleichen Mischer nach einiger Zeit Getreide-Saatgut dazu, erhält man im selben Arbeitsgang beschichtetes, bzw. umhülltes Saatgut.

Beispiel 6: Suspensions-Konzentrat

| | |
|---|---|
| Wirkstoff | 40 % |
| Ethylenglykol | 10 % |
| Nonylphenolpolyethylenglykolether (15 Mol Ethylenoxid) | 6 % |
| N-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig verwischt. Man erhält so ein Suspensions-Konzentrat, aus welchem durch Verdünnen mit Wasser Suspensionen jeder gewünschten Konzentration hergestellt werden können. Solche Suspensionen sind zur Blattapplikation und zur Saatbeizung (Tauchbeizung, Sprühbeizung) geeignet.

Benetzungsbeize

80 g trockene Getreidekörner (z.B. Mais) werden in verschliessbaren Plastikbechern mit 3-Cyano-4-(2,3-dichlorphenyl)-pyrrol in Form einer wässrigen Suspension, Emulsion oder Lösung gut durchwischt. Die Substanzapplikation wird so bemessen, dass eine Wirkstoff-Konzentration von 0,06 bis 0,001%, bezogen auf das Maistrockengewicht, erreicht wird.

Biologische Beispiele

Beispiel 1 : Wirkung gegen Botrytis cinerea an Apfelfrüchten

Künstlich verletzte Aepfel werden behandelt, indem eine aus Spritzpulver der Wirksubstanz hergestellte Spritzbrühe (0,006% Wirkstoff) auf die Verletzungsstellen aufgetropft wird. Die behandelten Früchte werden anschliessend mit einer Sporensuspension von Botrytis cinerea inokuliert und während einer Woche bei einer hohen Luftfeuchtigkeit und ca. 20°C inkubiert.

Bei der Auswertung werden die angefaulten Verletzungsstellen gezählt und daraus wird die fungizide Wirkung der Testsubstanz evaluiert. Die Verbindung der Formel Ia verhindert den Pilzbefall im Vergleich zu unbehandelten Kontrollfrüchten (100% Befall) fast vollständig (weniger als 5% Befall).

Beispiel 2 : Wirkung gegen Pyricularia oryzae auf Reis

Reispflanzen werden nach zweiwöchiger Anzucht mit einer aus Spritzpulver des Wirkstoffes hergestellten Spritzbrühe (0,02% Aktivsubstanz) besprüht. Nach 48 Stunden werden die behandelten Pflanzen mit einer Konidiensuspension des Pilzes infiziert. Nach 5 Tagen Inkubation bei 95-100% relativer Luftfeuchtigkeit und 24°C wird der Pilzbefall beurteilt. Die Verbindung der Formel Ia zeigt eine deutliche Hemmung des Pyriculariabefalls. Sie reduziert den Befall auf weniger als 10%.

Beispiel 3 : Wirkung gegen Cercospora arachidicola auf Erdnusspflanzen

a) Residual-protektive Wirkung

10-15 cm hohe Erdnusspflanzen werden mit einer aus Spritzpulver der Wirksubstanz hergestellten Spritzbrühe (0,02% Aktivsubstanz) besprüht und 48 Stunden später mit einer Konidiensuspension des Pilzes infiziert. Die infizierten Pflanzen werden während 72 Stunden bei ca. 21°C und hoher Luftfeuchtigkeit inkubiert und anschliessend bis zum Auftreten der typischen Blattflecken in einem Gewächshaus aufgestellt. Die Beurteilung der fungiziden Wirkung erfolgt 12 Tage nach der Infektion basierend auf Anzahl und Grösse der auftretenden Flecken.

b) Systemische Wirkung

Zu 10-15 cm hohen Erdnusspflanzen wird eine aus Spritzpulver des Wirkstoffes hergestellte Spritzbrühe gegossen (0,006% Aktivsubstanz bezogen auf das Erdvolumen). Nach 48 Stunden werden die behandelten Pflanzen mit einer Konidiensuspension des Pilzes infiziert und 72 Stunden bei ca. 21°C und hoher Luftfeuchtigkeit inkubiert. Anschliessend werden die Pflanzen im Gewächshaus aufgestellt und nach 11 Tagen wird der Pilzbefall beurteilt.

Im Vergleich zu unbehandelten, aber infizierten Kontrollpflanzen (Anzahl und Grösse der Flecken = 100%), zeigen Erdnusspflanzen, die mit dem Wirkstoff der Formel Ia behandelt wurden, einen auf weniger als 10% reduzierten Cercospora-Befall.

Beispiel 4 : Wirkung gegen Helminthosporium gramineum

Weizenkörner werden mit einer Sporensuspension des Pilzes kontaminiert und wieder angetrocknet. Die kontaminierten Körner werden mit einer aus Spritzpulver hergestellten Suspension der Testsubstanz gebeizt (600 ppm Wirkstoff bezogen auf das Gewicht der Samen). Nach zwei Tagen werden die Körner auf geeignete Agarschalen ausgelegt und nach weiteren vier Tagen wird die Entwicklung der Pilzkolonien um die Körner herum beurteilt. Anzahl und Grösse der Pilzkolonien werden zur Beurteilung der Testsubstanz herangezogen. Die Verbindung der Formel Ia verhinderte den Pilzbefall weitgehend (0 bis 10%).

Beispiel 5 : Wirkung gegen Fusarium nivale

Weizenkörner werden mit einer Sporensuspension des Pilzes kontaminiert und wieder angetrocknet. Die kontaminierten Körner werden mit einer aus Spritzpulver hergestellten Suspension der Testsubstanz gebeizt (600 ppm Wirkstoff bezogen auf das Gewicht der Samen). Nach zwei Tagen werden die Körner auf geeignete Agarschalen ausgelegt und nach weiteren vier Tagen wird die Entwicklung der Pilzkolonien um die Körner herum beurteilt. Anzahl und Grösse der Pilzkolonien werden zur Beurteilung der Testsubstanz herangezogen.

Bei den Körnern, die mit einem Spritzpulver behandelt worden sind, das als Wirkstoff die Verbindung der Formel Ia enthielt, wurde die Entwicklung der Pilzkolonien fast vollständig unterdrückt (0 bis 5%).

Beispiel 6 : Wirkung gegen Tilletia tritici

Gerstenkörner werden mit einer Sporensuspension des Pilzes kontaminiert und wieder angetrocknet. Die kontaminierten Körner werden mit einer aus Spritzpulver hergestellten Suspension der Testsubstanz gebeizt (600 ppm Wirkstoff bezogen auf das Gewicht der Samen). Nach zwei Tagen werden die Körner auf geeignete Agarschalen ausgelegt und nach weiteren vier Tagen wird die Entwicklung der Pilzkolonien um die Körner herum beurteilt. Anzahl und Grösse der Pilzkolonien werden zur Beurteilung der Testsubstanz herangezogen. Die Verbindung der Formel Ia verhindert den Pilzbefall weitgehend (0 bis 10%).

Beispiel 7 : Wirkung gegen Botrytis cinerea, Fusarium nivale, Helminthosporium teres, und Monilinia fructicola (Agar-Incorporationstest).

Der Wirkstoff wird in einen sterilen, flüssigen, bis auf 50°C abgekühlten Agar-Nährboden sorgfältig eingearbeitet und in Petrischalen abgefüllt. Die Konzentrationen beziehen sich auf die Menge Substanz (in ppm) im Nährboden. Nachdem der Nährboden erstarrt ist, werden die Schalen in der Mitte mit einem pilzbewachsenen Agarscheibchen von ca. 6 mm Ø beimpft. Diese Agarscheibchen werden aus einer Petrischalenkultur des Testpilzes mit einem Korkbohrer ausgestanzt und mit der Oberseite nach unten auf die behandelte Agarplatte gelegt.

Die beimpften Schalen werden bei 20-24°C im Dunkeln inkubiert.

Sobald der wachsende Pilz in der parallelen Kontrollschale (ohne Wirkstoffzusatz) dreiviertel seiner Agar-Oberfläche bedeckt hat, wird das Mycelwachstum in den behandelten Schalen markiert und deren weiterer Zuwachs pro Tag kontrolliert. Die Werte werden auf halblogarithmisches Millimeterpapier aufgetragen. Aus dieser Graphik werden die EC-50 Werte abgelesen, d.h. es wird jene Wirkstoffkonzentration ermittelt, bei der das Pilzwachstum zu 50% gehemmt wird.

Sämtliche in der DE-OS 29 27 480 (bzw. GB-2,024,824 bzw. US-4,229,465) offenbarten 3-Cyano-4-phenylpyrrol-Derivate wurden gegen die oben genannten Pilze vergleichend geprüft. Die Wirkstoffkonzentrationen in den Nährböden betrugen 100 ppm, 10 ppm, 1 ppm, 0,1 ppm und 0,01 ppm. (100 ppm = 0,01% AS).

Mit den Verbindungen der Formel (die gemäss den Angaben in der Literatur numeriert sind)

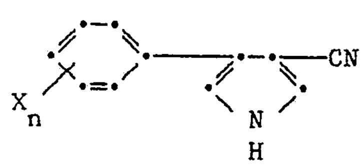

| No. | $X_n$ | Smp. [°C] |
|---|---|---|
| 8 | H | 129-131 |
| 9 | 2-Cl | 137-139 |
| 10 | 3-Cl | 147 |
| 11 (= Ia) | 2,3-$Cl_2$ | 153 |
| 12 | 2-$CF_3$ | 105-107 |
| 13 | 2-Br | 145 |
| 14 | 2-$CH_3$ | 115-118 |

wurden gegen die verschiedenen Pilze folgende EC-Werte erzielt :

EC-50 Werte in ppm A.S.

| Pilz | Verbindung Nr. | | | | | | |
|---|---|---|---|---|---|---|---|
| | 8 | 9 | 10 | 11 | 12 | 13 | 14 |
| B.cinerea | 10,0 | 1,1 | 0,9 | 0,7 | 1,0 | 1,5 | 3,4 |
| F.nivale | 15,0 | 2,0 | 1,9 | 0,36 | 0,8 | 0,85 | 3,0 |
| H.teres | 15,0 | 4,5 | 1,8 | 0,75 | 3,0 | 2,3 | 9,0 |
| M.fructicola | 3,0 | 1,0 | 1,7 | 0,6 | 0,8 | 1,4 | 1,8 |

Es ist ersichtlich, dass unter den aus der Literatur vorbekannten 3-Cyano-4-phenylpyrrol-Derivaten nur eine einzige Verbindung, nämlich Nr. 11, d.h. die Verbindung Ia vorliegender Erfindung, Hemmwerte bei ungewöhnlich niedriger Wirkstoffkonzentration erzielt, während alle übrigen Verbindungen zur Erzielung desselben Resultats in deutlich höheren Aufwandmengen eingesetzt werden müssen.

## Ansprüche

1. Verfahren zur Bekämpfung oder Verhütung eines Befalls von Kulturpflanzen durch phytopathogene Mikroorganismen, dadurch gekennzeichnet, dass man 3-Cyano-4-(2,3-dichlorphenyl)-pyrrol der Formel Ia

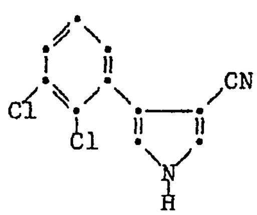

(Ia)

allein oder zusammen mit Träger- und/oder weiteren Hilfstoffen auf Pflanzenteile, Pflanzen oder deren Standort appliziert.

2. Verfahren gemäss Anspruch 1, dadurch gekennzeichnet, dass die Mikroorganismen Pilze sind.

3. Verfahren gemäss Anspruch 2 gegen Pilze aus der Gruppe Fungi imperfecti.

4. Verfahren gemäss Anspruch 3 gegen Botrytis spp..

5. Verfahren gemäss Anspruch 1, dadurch gekennzeichnet, dass Blattapplikation durchgeführt wird.

6. Verfahren gemäss Anspruch 1, dadurch gekennzeichnet, dass es durch Bodenapplikation durchgeführt wird.

7. Verfahren gemäss Anspruch 1, dadurch gekennzeichnet, dass Beizapplikation durchgeführt wird.

8. Mikrobizides Mittel zur Bekämpfung oder Verhütung eines Befalls von Kulturpflanzen durch phytopathogene Mikroorganismen, dadurch gekennzeichnet, dass es als aktive Komponente 0,1 bis 95 Gew.-% 3-Cyano-4-(2,3-dichlorphenyl)-pyrrol enthält, zusammen mit 99,8 bis 5 Gew.-% eines festen oder flüssigen Zusatzstoffes und 0,1 bis 25 Gew.-% eines Tensides.

9. Mikrobizides Mittel zur Beizung von Samen oder Saatgut gegen Befall durch phytopathogene Mikroorganismen, dadurch gekennzeichnet, dass es als aktive Komponente 0,1 bis 95 Gew.-% 3-Cyano-4-(2,3-dichlorphenyl)-pyrrol enthält, zusammen mit 99,8 bis 5 Gew.-% eines festen oder flüssigen Zusatzstoffes und 0,1 bis 25 Gew.-% eines Tensides.

## Claims

1. A method of controlling or preventing an attack on cultivated plants by phytopathogenic microorganisms which method comprises applying to parts of the plants, to the plants or to the locus thereof 3-cyano-4-(2,3-dichlorophenyl)pyrrole of the formula Ia

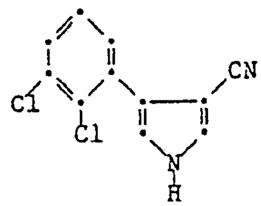

(Ia)

either alone or together with carriers and/or further adjuvants.

2. A method according to claim 1, wherein the microorganisms are fungi.

3. A method according to claim 2 for controlling fungi from the group of Fungi imperfecti.

4. A method according to claim 3 for controlling Botrytis spp.

5. A method according to claim 1, wherein it is effected by foliar application.

6. A method according to claim 1, wherein it is effected by soil application.

7. A method according to claim 1, wherein it is effected by application by dressing.

8. A microbicidal composition for controlling or preventing an attack on cultivated plants by phytopathogenic microorganisms, which composition contains, as active component, 0.1 to 95% by weight of 3-cyano-4-(2,3-dichlorophenyl)pyrrole, together with 99.8 to 5% by weight of a solid or liquid adjuvant and 0.1 to 25% by weight of a surfactant.

9. A microbicidal composition for dressing seeds to protect them from attack by phytopathogenic microorganisms, which composition contains, as active component 0.1 to 95% by weight of 3-cyano-4-(2,3-dichlorophenyl)-pyrrole, together with 99.8 to 5% by weight of a solid or liquid adjuvant and 0.1 to 25% by weight of a surfactant.

## Revendications

1. Procédé pour combattre ou prévenir une attaque de végétaux cultivés par des microorganismes phytopathogènes, caractérisé en ce que l'on applique sur des parties des végétaux, les végétaux ou leur habitat le 3-cyano-4-(2,3-dichlorophényl)-pyrrole de formule Ia

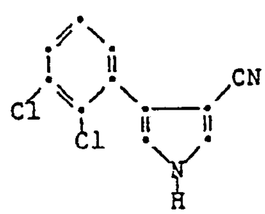

(Ia)

seul ou avec des véhicules et/ou d'autres produits auxiliaires.

2. Procédé selon la revendication 1, caractérisé en ce que les microorganismes sont des mycètes.

3. Procédé selon la revendication 2, contre les mycètes du groupe Fungi imperfecti.

4. Procédé selon la revendication 3, contre Botrytis spp.

5. Procédé selon la revendication 1, caractérisé en ce que l'on procède par application sur le feuillage.

6. Procédé selon la revendication 1, caractérisé en ce que l'on procède par application dans le sol.

7. Procédé selon la revendication 1, caractérisé en ce que l'on procède par désinfection.

8. Produit microbicide pour combattre ou prévenir une attaque de végétaux cultivés par des microorganismes phytopathogènes, caractérisé en ce qu'il contient en tant que composant actif, en proportions de 0,1 à 95% en poids, le 3-cyano-4-(2,3-dichlorophényl)-pyrrole, avec 99,8 à 5% en poids d'un additif solide ou liquide et 0,1 à 25% en poids d'un agent tensio-actif.

9. Produit microbicide pour la désinfection des graines ou des semences, à titre de protection contre l'attaque par des microorganismes photopathogènes, caractérisé en ce qu'il contient en tant que composant actif, en proportion de 0,1 à 95% en poids, le 3-cyano-4-(2,3-dichlorophényl)-pyrrole avec 99,8 à 5% en poids d'un additif solide ou liquide et 0,1 à 25% en poids d'un agent tensio-actif.